# EUROPEAN PATENT SPECIFICATION

(11) **EP 2 334 012 B1**
(45) Date of publication and mention of the grant of the patent: **28.06.2017**
(21) Application number: 09815585.6
(22) Date of filing: 03.08.2009
(51) Int. Cl.: H04L 12/24, H04L 29/08, H04L 12/58

(54) **SYSTEM AND METHOD FOR STATE MANAGEMENT BASED ON INSTANT MESSAGING PLATFORM**
SYSTEM UND VERFAHREN ZUR STATUSVERWALTUNG AUF BASIS EINER SOFORTNACHRICHTENPLATTFORM
SYSTÈME ET PROCÉDÉ DE GESTION D'ÉTAT BASÉS SUR UNE PLATE-FORME DE MESSAGERIE INSTANTANÉE

(30) Priority: 24.09.2008 CN 200810216542
(43) Date of publication of application: 15.06.2011
(73) Proprietor: ZTE Corporation, Shenzhen, Guangdong 518057 (CN)
(72) Inventor: LIANG, Bin, Shenzhen Guangdong 518057 (CN); CUI, Pisuo, Shenzhen Guangdong 518057 (CN); LU, Jianfeng, Shenzhen Guangdong 518057 (CN); LU, Qinyuan, Shenzhen Guangdong 518057 (CN)
(74) Representative: Office Freylinger
(86) International application number: PCT/CN2009/073052
(87) International publication number: WO 2010/034216

(56) References cited:
- EP-A1- 1 347 606
- CN-A- 1 780 264
- CN-A- 101 155 324
- CN-A- 101 378 550
- US-A1- 2005 267 895
- CHEN CHUANTAO. ET AL: 'Design and Implementation of Network Multimedia Communication Session System Based on SIP Protocol. Chinese Master's Theses Full-Text Database' INFORMATION SCIENCE AND TECHNOLOGY 15 September 2007, pages 136 - 340, XP008155131

## Description

### Filed of the Invention

The present invention belongs to the field of state presence in an instant messaging platform, and particularly relates to a system and a method for state management based on an instant messaging platform.

### Background of the Invention

Instant messaging provides for a user a convenient and rapid way of communicating with friends via a network, through which people can view good friends, chat on line, transmit files mutually, conduct a voice dialogue, have a video conference, and even make bidirectional communication on a cell phone.

An instant messaging client obtains packet user information from an instant messaging application server (instant messaging AS) and can distinguish the states of the user such as on line, off line, and the like. In a large-sized instant messaging system, the instant messaging AS needs to be frequently accessed while inquiring user packet information and user states, thereby increasing the system load and network overhead and influencing the system performance.

Document EP 1 347 606 A1 discloses a system for state management based on an instant messaging platform. The system disclosed in this document does however not solve the above-mentioned problem.

### Summary of the Invention

The object of the present invention is to overcome the shortcomings of the prior art and to provide a system and a method for state management based on an instant messaging platform. The present invention separates user management from state management in an instant messaging to decrease the system load and reduce the network overhead.

In order to solve the above technical problem, the present invention is realized by the following technical solutions:
According to one aspect of the present invention, there is provided a system for state management based on an instant messaging platform according to claim 1, wherein the system comprises: a client, a registration application server, and a state presence application server.

In the above mentioned system, the client can be a PC, a PAD, a cell phone or the like.

In the above mentioned system, the client is connected to the registration application server via an access gateway of the network.

In the above mentioned system, the access gateway is a broadband gateway.

According to another aspect of the present invention, there is provided a method for state management based on an instant messaging platform.

The method for state management based on an instant messaging platform according to the present invention comprises the following steps:
A, a client sending a login request message via a network to a registration application server;
B, the registration application server receiving the login request message sent by the client and performing authentication on the client, and sending, after the authentication is passed, client login information to a third party server;
C, the third party server searching its database according to the client login information, obtaining group information of the client and member information of the group, and returning to the client the group information and the member information of the group via a network;
D, the client receiving the group information and the member information of the group sent by the third party server and sending its current state and the group information via a network to a state presence application server; and
E, the state presence application server receiving the current state and the group information of the client, sending states of other on-line members in the group to the client, and forwarding the current state of the client to other on-line members in the group.

The login request message in the step A is consisted of a username and a password.

The client login information in the step B comprises client identity information and IP address and port number of the client.

The group information of the client in the step C comprises a group name and an identifier, wherein the identifier possesses uniqueness.

The step D comprises specifically:
step D1, the client receiving and storing the group information and the member information of the group sent by the third party server;
step D2, the client sending the current state to the state presence application server; and
step D3, the client sending the group information received from the third party server to the state presence application server.

The step E comprises specifically:
step E1, the state presence (PS) application server receiving the group information sent by the client, and determining whether the group information is established on the PS application server or not, wherein if it is established, entering step E2; otherwise, establishing the group information and then entering step E2;
step E2, the PS application server determining whether the client member is established in the group, wherein if it is established, entering step E3; otherwise, establishing the client member in the group and then entering step E3;
step E3, the PS application server storing the state of the client member in the group as the current state sent by the client, and sending the current states of other on-line members in the group to the client; and
step E4, the PS application server forwarding the current state of the client to other on-line members in the group.

The present invention has the following beneficial effects as compared with the prior arts: the present invention separates user management from state management in the instant messaging, wherein its PS application server only performs state management, and group and user information are stored specifically in other third party server(s). A plurality of groups are established in the third party server, and the user information is stored in the group, thereby not only decreasing the load of other parts of the system but also reducing the network overhead and realizing smooth operation.

Other features and advantages of the present invention will be described in the following description and partly become obvious from the description, or be understood by implementing the present invention. The objects and other advantages of the present invention can be realized and obtained through the structures indicated by the description, claims and drawings.

### Brief Description of the Drawings

The drawings provide a further understanding of the present invention and form a part of the Description. The drawings together with the embodiments of the present invention are used to explain the present invention without limiting the same, wherein:
Fig. 1 is a schematic diagram showing a system for state management based on an instant messaging platform according to an embodiment of the present invention; and
Fig. 2 is a flow chart showing a method for state management based on an instant messaging platform according to an embodiment of the present invention.

### Detailed Description of Embodiments

In order to provide a better understanding of the present invention, the present invention will be further described hereinafter by the specific embodiments in combination with the drawings. It shall be understood that the preferable embodiments described herein are provided only for illustrating and explaining the present invention, not for limiting the present invention.

In the case that no confliction arises, the embodiments and the features of the embodiments in the present application can be combined with one another.

According to an embodiment of the present invention, there is first provided a system for state management based on an instant messaging platform.

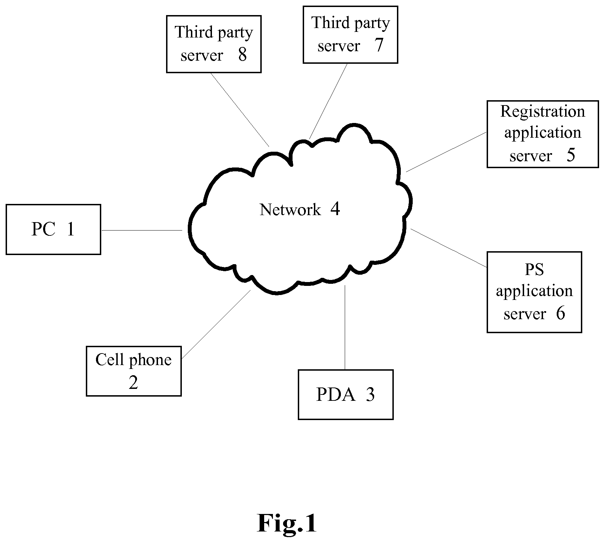

Referring to Fig. 1, the system for state management based on an instant messaging platform in the present invention comprises clients 1, 2, 3 (the clients 1, 2, 3 can be devices such as a PC, a cell phone, a PDA, or the like), a network 4, a registration application server 5, a PS application server 6, and two third party servers 7, 8.

A certain client sends a login request message via an access gateway of the network 4 to the registration application server 5. The registration application server 5 performs authentication on the client according to the login request message sent by the client and sends client login information to the third party server 7 or 8 after the authentication is passed. The third party server 7 or 8 searches group information of the client according to the client login information, and returns the group information and the member information of the group via the access gateway of the network 4 to the client after receiving the client login information sent by the registration application server 5. After receiving the group information and the member information of the group sent by the third party server, the client sends its current state and group information via the access gateway of the network 4 to the PS application server 6. The PS application server 6 manages the group information of the client and the member information of the group, and can send the states of other on-line members in the group to the client and forwards the current state of the client to other on-line members in the group.

The access gateway of the above mentioned network 4 can be a broadband gateway (BGW).

According to an embodiment of the present invention, there is also provided a method for state management based on an instant messaging platform.

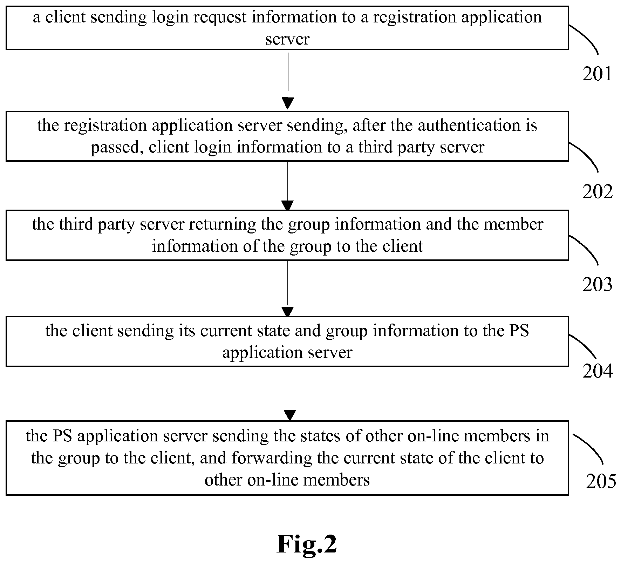

Referring to Fig. 2, the method for state management based on an instant messaging platform comprises the following steps:
201, a certain client sending a login request message consisted of a username and a password via an access gateway of a network to a registration application server;
202, the registration application server receiving the login request message sent by the client, performing authentication on the client, and sending, after the authentication is passed, client login information to a third party server, the step comprising specifically:
   step a. the registration application server receiving the login request message sent by the client and performing authentication on the user identity thereof; returning a response of successful login to the client and entering step b if the authentication is passed; and returning failure indication information if the authentication fails; and
   step b. sending the client login information consisted of client identity information and the IP address and port number of the client to the third party server;
203, the third party server searching its database according to the client identity information in the client login information, obtaining the group information of the client and the member information of the group, and returning the group information and the member information of the group via the network to the client according to the IP address and the port number of the client; wherein the group information comprises a group name and an identifier, the identifier possessing uniqueness;
204, the client receiving the group information and the member information of the group sent by the third party server and sending its current state and group information via the network to the PS application server, the step comprising specifically:
   step c, the client receiving and storing the group information and the member information of the group sent by the third party server;
   step d, the client sending its current state to the PS application server; and
   step e, the client sending the group information received from the third party server to the PS application server;
205, the PS application server receiving the current state and the group information of the client, sending the states of other on-line members in the group to the client, and forwarding the current state of the client to other on-line members in the group, the step comprising specifically:
   step f, the PS application server receiving the group information sent by the client; if the group information has been established on the PS application server, entering step g; otherwise, establishing the group information and entering step g;
   step g, the PS application server determining whether the client member is established in the group or not; if it is established, entering step h; otherwise, establishing the client member in the group and entering step h;
   step h, the PS application server storing the state of the client member in the group as the current state sent by the client and sending the current states of other on-line members in the group to the client; and
   step i, the PS application server forwarding the current state of the client to other on-line members in the group.

As described above, by means of the technical solutions provided in the embodiments of the present invention, user management is separated from state management in the instant messaging, wherein its PS application server only performs state management, and group and user information are stored specifically in other third party server(s). A plurality of groups are established in the third party server, and the user information is stored in the group, thereby not only decreasing the load of other parts of the system but also reducing the network overhead and realizing smooth operation.

The descriptions above are only preferable embodiments of the present invention, which are not used to restrict the present invention. For those skilled in the art, any amendments, equivalent substitutions, improvements, etc. within the present invention are all concluded in the scope of protection of the present invention.

## Claims

1. A system for state management based on an instant messaging platform, comprising:
a client, configured to send a login request message via a network to a registration application server;
the registration application server (5), configured to perform an authentication process on the client according to the login request message sent by the client and send client login information;
at least one third party server (7, 8), configured to receive the client login information sent by the registration application server, search group information of the client according to the client login information, and return to the client the group information and member information of the group via the network;
the client is further configured to receive the group information and the member information of the group sent by the third party server and send a current state and group information of the client to a state presence application server (6); and
the state presence application server (6), configured to receive the current state and group information of the client, send states of other on-line members in a group to the client, and forward the current state of the client to other on-line members in the group.

2. The system for state management based on an instant messaging platform according to Claim 1, **characterized in that** the client is a PC, a PAD, or a cell phone.

3. The system for state management based on an instant messaging platform according to Claim 1, **characterized in that** the client is connected to the registration application server (5) via an access gateway of the network.

4. The system for state management based on an instant messaging platform according to Claim 3, **characterized in that** the access gateway is a broadband gateway.

5. A method for state management based on an instant messaging platform, **characterized by** comprising the following steps:
A, a client sending a login request message via a network to a registration application server (S201);
B, the registration application server receiving the login request message sent by the client and performing authentication on the client, and sending, after the authentication is passed, client login information to a third party server (S202);
C, the third party server searching its database according to the client login information, obtaining group information of the client and member information of the group, and returning to the client the group information and the member information of the group via a network (S203);
D, the client receiving the group information and the member information of the group sent by the third party server and sending its current state and the group information via a network to a state presence application server (S204); and
E, the state presence application server receiving the current state and the group information of the client, sending states of other on-line members in the group to the client, and forwarding the current state of the client to other on-line members in the group (S205).

6. The method for state management based on an instant messaging platform according to Claim 5, **characterized in that** the login request message in the step A is consisted of a username and a password.

7. The method for state management based on an instant messaging platform according to Claim 5 or Claim 6, **characterized in that** the client login information in the step B comprises client identity information and IP address and port number of the client.

8. The method for state management based on an instant messaging platform according to Claim 7, **characterized in that** the group information of the client in the step C comprises a group name and an identifier, wherein the identifier possesses uniqueness.

9. The method for state management based on an instant messaging platform according to Claim 8, **characterized in that** the step D specifically comprises:
step D1, the client receiving and storing the group information and the member information of the group sent by the third party server;
step D2, the client sending the current state to the state presence application server; and
step D3, the client sending the group information received from the third party server to the state presence application server.

10. The method for state management based on an instant messaging platform according to Claim 9, **characterized in that** the step E specifically comprises:
step E1, the state presence (PS) application server receiving the group information sent by the client, and determining whether the group information is established on the PS application server or not, wherein if it is established, entering step E2; otherwise, establishing the group information and then entering step E2;
step E2, the PS application server determining whether the client member is established in the group, wherein if it is established, entering step E3; otherwise, establishing the client member in the group and then entering step E3;
step E3, the PS application server storing the state of the client member in the group as the current state sent by the client, and sending the current states of other on-line members in the group to the client; and
step E4, the PS application server forwarding the current state of the client to other on-line members in the group.

## Patentansprüche

1. System zur Statusverwaltung auf Basis einer Sofortnachrichtenplattform, aufweisend:
einen Client, der dafür ausgelegt ist, eine Anmeldeanforderungsnachricht über ein Netz an einen Registrierungsanwendungsserver zu senden;
wobei der Registrierungsanwendungsserver (5) dafür ausgelegt ist, einen Authentifizierungsprozess am Client gemäß der vom Client gesendeten Anmeldeanforderungsnachricht durchzuführen und Client-Anmeldeinformationen zu senden;
wobei mindestens ein Server (7, 8) eines Dritten dafür ausgelegt ist, die vom Registrierungsanwendungsserver gesendeten Client-Anmeldeinformationen zu empfangen, Gruppeninformationen des Client gemäß den Client-Anmeldeinformationen zu durchsuchen und dem Client die Gruppeninformationen und Mitgliedsinformationen der Gruppe über das Netz zurückzusenden;
wobei der Client ferner dafür ausgelegt ist, die Gruppeninformationen und die Mitgliedsinformationen der Gruppe, die vom Server eines Dritten gesendet wurden, zu empfangen und aktuelle Status- und Gruppeninformationen des Client an einen Status-Anwesenheit-Anwendungsserver (6) zu senden; und
wobei der Status-Anwesenheit-Anwendungsserver (6) dafür ausgelegt ist, die aktuellen Status- und Gruppeninformationen des Client zu empfangen, Status von anderen zugeschalteten Mitgliedern in einer Gruppe an den Client zu senden und den aktuellen Status des Client an andere zugeschaltete Mitglieder in der Gruppe zu senden.

2. System zur Statusverwaltung auf Basis einer Sofortnachrichtenplattform nach Anspruch 1, **dadurch gekennzeichnet, dass** der Client ein PC, ein PAD oder ein Mobiltelefon ist.

3. System zur Statusverwaltung auf Basis einer Sofortnachrichtenplattform nach Anspruch 1, **dadurch gekennzeichnet, dass** der Client mit dem Registrierungsanwendungsserver (5) über einen Zugangsnetzübergang des Netzes verbunden ist.

4. System zur Statusverwaltung auf Basis einer Sofortnachrichtenplattform nach Anspruch 3, **dadurch gekennzeichnet, dass** der Zugangsnetzübergang ein Breitbandnetzübergang ist.

5. Verfahren zur Statusverwaltung auf Basis einer Sofortnachrichtenplattform, **gekennzeichnet durch** das Umfassen der folgenden Schritte:
A, wobei ein Client eine Anmeldeanforderungsnachricht über ein Netz an einen Registrierungsanwendungsserver sendet (S201);
B, wobei der Registrierungsanwendungsserver die vom Client gesendete Anmeldeanforderungsnachricht empfängt und eine Authentifizierung am Client ausführt und, nach erfolgreicher Authentifizierung, Client-Anmeldeinformationen an einen Server eines Dritten sendet (S202);
C, wobei der Server eines Dritten seine Datenbank gemäß den Client-Anmeldeinformationen durchsucht, Gruppeninformationen des Client und Mitgliedsinformationen der Gruppe erhält und dem Client die Gruppeninformationen und die Mitgliedsinformationen der Gruppe über ein Netz zurücksendet (S203);
D, wobei der Client die vom Server eines Dritten gesendeten Gruppeninformationen und die Mitgliedsinformationen der Gruppe empfängt und seine aktuellen Status- und die Gruppeninformationen über ein Netz an einen Status-Anwesenheit-Anwendungsserver sendet (S204); und
E, wobei der Status-Anwesenheit-Anwendungsserver die aktuellen Status- und die Gruppeninformationen des Client empfängt, Status von anderen zugeschalteten Mitgliedern in der Gruppe an den Client sendet und den aktuellen Status des Client an andere zugeschaltete Mitglieder in der Gruppe weiterleitet (S205).

6. Verfahren zur Statusverwaltung auf Basis einer Sofortnachrichtenplattform nach Anspruch 5, **dadurch gekennzeichnet, dass** die Anmeldeanforderungsnachricht in Schritt A aus einem Benutzernamen und einem Passwort besteht.

7. Verfahren zur Statusverwaltung auf Basis einer Sofortnachrichtenplattform nach Anspruch 5 oder Anspruch 6, **dadurch gekennzeichnet, dass** die Client-Anmeldeinformationen in Schritt B Client-Identitätsinformationen und die IP-Adresse und Portnummer des Client umfassen.

8. Verfahren zur Statusverwaltung auf Basis einer Sofortnachrichtenplattform nach Anspruch 7, **dadurch gekennzeichnet, dass** die Gruppeninformationen des Client in Schritt C einen Gruppennamen und einen Bezeichner umfassen, wobei der Bezeichner eine Einzigartigkeit besitzt.

9. Verfahren zur Statusverwaltung auf Basis einer Sofortnachrichtenplattform nach Anspruch 8, **dadurch gekennzeichnet, dass** Schritt D insbesondere umfasst:
Schritt D1, wobei der Client die Gruppeninformationen und die Mitgliedsinformationen der Gruppe, die vom Server eines Dritten gesendet wurden, empfängt und speichert;
Schritt D2, wobei der Client den aktuellen Status an den Status-Anwesenheit-Anwendungsserver sendet; und
Schritt D3, wobei der Client die vom Server eines Dritten empfangenen Informationen an den Status-Anwesenheit-Anwendungsserver sendet.

10. Verfahren zur Statusverwaltung auf Basis einer Sofortnachrichtenplattform nach Anspruch 9, **dadurch gekennzeichnet, dass** Schritt E insbesondere umfasst:
Schritt E1, wobei der Status-Anwesenheit-(PS)-Anwendungsserver die vom Client gesendeten Gruppeninformationen empfängt und bestimmt, ob die Gruppeninformationen auf dem PS-Anwendungsserver erstellt sind oder nicht, wobei, falls sie erstellt sind, Schritt E2 erfolgt; ansonsten die Gruppeninformationen erstellt werden und dann Schritt E2 erfolgt;
Schritt E2, wobei der PS-Anwendungsserver bestimmt, ob das Client-Mitglied in der Gruppe erstellt ist, wobei, falls es erstellt ist, Schritt E3 erfolgt; ansonsten das Client-Mitglied in der Gruppe erstellt wird und dann Schritt E3 erfolgt;
Schritt E3, wobei der PS-Anwendungsserver den vom Client gesendeten Status des Client-Mitglieds in der Gruppe als aktuellen Status speichert und die aktuellen Status von anderen zugeschalteten Mitgliedern in der Gruppe an den Client sendet; und
Schritt E4, wobei der PS-Anwendungsserver den aktuellen Status des Client an andere zugeschaltete Mitglieder in der Gruppe sendet.

## Revendications

1. Un système de gestion d'états basé sur une plateforme de messagerie instantanée, comprenant :
un client, configuré de façon à envoyer un message de demande d'ouverture de session par l'intermédiaire d'un réseau à un serveur d'application d'enregistrement,
le serveur d'application d'enregistrement (5) étant configuré de façon à exécuter un procédé d'authentification sur le client en fonction du message de demande d'ouverture de session envoyé par le client et à envoyer des informations d'ouverture de session client,
au moins un serveur de tierce partie (7, 8), configuré de façon à recevoir les informations d'ouverture de session client envoyées par le serveur d'application d'enregistrement, à parcourir les informations de groupe du client en fonction des informations d'ouverture de session client et à renvoyer au client les informations de groupe et des informations de membre du groupe par l'intermédiaire du réseau,
le client est configuré en outre de façon à recevoir les informations de groupe et les informations de membre du groupe envoyées par le serveur de tierce partie et à envoyer des informations de groupe et d'état en cours du client à un serveur d'application de présence d'état (6), et
le serveur d'application de présence d'état (6) étant configuré de façon à recevoir les informations de groupe et d'état en cours du client, à envoyer des états d'autres membres en ligne dans un groupe au client et à transmettre l'état en cours du client à d'autres membres en ligne dans le groupe.

2. Le système de gestion d'états basé sur une plateforme de messagerie instantanée selon la revendication 1, **caractérisé en ce que** le client est un PC, un PAD ou un téléphone cellulaire.

3. Le système de gestion d'états basé sur une plateforme de messagerie instantanée selon la revendication 1, **caractérisé en ce que** le client est connecté au serveur d'application d'enregistrement (5) par l'intermédiaire d'une passerelle d'accès du réseau.

4. Le système de gestion d'états basé sur une plateforme de messagerie instantanée selon la revendication 3, **caractérisé en ce que** la passerelle d'accès est une passerelle à large bande.

5. Un procédé de gestion d'états basé sur une plateforme de messagerie instantanée, **caractérisé en ce qu'**il comprend les étapes suivantes :
A, l'envoi par un client d'un message de demande d'ouverture de session par l'intermédiaire d'un réseau à un serveur d'application d'enregistrement (S201),
B, la réception par le serveur d'application d'enregistrement du message de demande d'ouverture de session envoyé par le client et l'exécution d'une authentification sur le client, et l'envoi, une fois l'authentification passée avec succès, d'informations d'ouverture de session client à un serveur de tierce partie (S202),
C, le parcours par le serveur de tierce partie de sa base de données en fonction des informations d'ouverture de session client, l'obtention d'informations de groupe du client et d'informations de membre du groupe et le renvoi au client des informations de groupe et des informations de membre du groupe par l'intermédiaire d'un réseau (S203),
D, la réception par le client des informations de groupe et des informations de membre du groupe envoyées par le serveur de tierce partie et l'envoi de son état en cours et des informations de groupe par l'intermédiaire d'un réseau à un serveur d'application de présence d'état (S204), et
E, la réception par le serveur d'application de présence d'état de l'état en cours et des informations de groupe du client, l'envoi d'états d'autres membres en ligne dans le groupe au client et le transfert de l'état en cours du client à d'autres membres en ligne dans le groupe (S205).

6. Le procédé de gestion d'états basé sur une plateforme de messagerie instantanée selon la revendication 5, **caractérisé en ce que** le message de demande d'ouverture de session dans l'étape A se compose d'un nom d'utilisateur et d'un mot de passe.

7. Le procédé de gestion d'états basé sur une plateforme de messagerie instantanée selon la revendication 5 ou 6, **caractérisé en ce que** les informations d'ouverture de session client dans l'étape B comprennent des informations d'identité de client et une adresse IP et un numéro de port du client.

8. Le procédé de gestion d'états basé sur une plateforme de messagerie instantanée selon la revendication 7, **caractérisé en ce que** les informations de groupe du client dans l'étape C comprennent un nom de groupe et un identifiant, l'identifiant possédant un caractère unique.

9. Le procédé de gestion d'états basé sur une plateforme de messagerie instantanée selon la revendication 8, **caractérisé en ce que** l'étape D comprend spécifiquement :
étape D1, la réception par le client et la conservation en mémoire des informations de groupe et des informations de membre du groupe envoyées par le serveur de tierce partie,
étape D2, l'envoi par le client de l'état en cours au serveur d'application de présence d'état, et
étape D3, l'envoi par le client des informations de groupe reçues à partir du serveur de tierce partie au serveur d'application de présence d'état.

10. Le procédé de gestion d'états basé sur une plateforme de messagerie instantanée selon la revendication 9, **caractérisé en ce que** l'étape E comprend spécifiquement :
étape E1, la réception par le serveur d'application de présence d'état (PS) des informations de groupe envoyées par le client et la détermination si les informations de groupe sont établies sur le serveur d'application PS ou non, où, si elles sont établies, le passage à l'étape E2 ; dans le cas contraire, l'établissement des informations de groupe et ensuite le passage à l'étape E2,
étape E2, la détermination par le serveur d'application PS si le membre client est établi dans le groupe, où; s'il est établie, le passage à l'étape E3 ; dans le cas contraire, l'établissement du membre client dans le groupe et ensuite le passage à l'étape E3,
étape E3, la conservation en mémoire par le serveur d'application PS de l'état du membre client dans le groupe en tant qu'état en cours envoyé par le client, et l'envoi des états en cours d'autres membres en ligne dans le groupe au client, et
étape E4, le transfert par le serveur d'application PS de l'état en cours du client à d'autres membres en ligne dans le groupe.
